# EUROPÄISCHE PATENTANMELDUNG

(11) **EP 1 959 151 A2**
(43) Veröffentlichungstag der Anmeldung: **20.08.2008**
(21) Anmeldenummer: 07023319.2
(22) Anmeldetag: 01.12.2007
(51) Int. Cl.: F16D 48/06

(54) **Verfahren und Steuergerät zur Erkennung des Schließzustands einer Kupplung in einem Triebstrang eines Kraftfahrzeugs**

(30) Priorität: 13.02.2007 DE 102007006976
(71) Anmelder: Dr. Ing. h.c. F. Porsche Aktiengesellschaft, 70435 Stuttgart (DE)
(72) Erfinder: Janssen, Antoon, Nicolaas, 68782 Brühl (DE); Kannen, Thomas, 75446 Wiernsheim (DE)

(57) **Zusammenfassung**

Vorgestellt wird ein Verfahren zum Beurteilen des Schließzustands einer Kupplung (14) in einem Triebstrang (10) eines Kraftfahrzeugs, mit der ein Fahrer einen Kraftschluss zwischen einem Verbrennungsmotor (12) und einem Wechselgetriebe (16) des Kraftfahrzeugs steuert, wobei die Beurteilung in Abhängigkeit vom Signal eines Sensors (30) erfolgt, der eine Betätigung der Kupplung (14) detektiert. Das Verfahren zeichnet sich dadurch aus, dass eine über der Kupplung (14) auftretende Drehzahldifferenz (dn) bestimmt wird, und die Beurteilung ergänzend in Abhängigkeit von der Drehzahldifferenz (dn) erfolgt. Ferner wird ein zur Durchführung des Verfahrens eingerichtetes Steuergerät (26) vorgestellt.

## Beschreibung

Die Erfindung betrifft ein Verfahren nach dem Oberbegriff des Anspruchs 1 und ein Steuergerät nach dem Oberbegriff des unabhängigen Vorrichtungsanspruchs.

Ein solches Verfahren und ein solches Steuergerät wird bereits bei Kraftfahrzeugen, die in Serie produziert werden, verwendet. Bei der Steuerung moderner Verbrennungsmotoren werden häufig Steuerungsroutinen zur Verbesserung des Fahrkomforts ausgeführt. Beispiele solcher Routinen sind Funktionen zur Lastschlagdämpfung und Antiruckel-Funktionen. Bei solchen Routinen und Funktionen erfolgen Eingriffe in die Steuerung des Verbrennungsmotors, die das vom Verbrennungsmotor erzeugte Drehmoment beeinflussen. Die Eingriffe erfolgen so, dass Drehschwingungen des Triebstrangs gedämpft werden und/oder Anregungen solcher Drehschwingungen verringert werden. Es versteht sich, dass sich Eingriffe in die Steuerung des Verbrennungsmotors nur bei geschlossener Reibungskupplung auf den übrigen Triebstrang auswirken. Es versteht sich ferner, dass die Eingriffe auf das Trägheitsmoment des Triebstrangs einschließlich des Verbrennungsmotors abgestimmt sein müssen, da die Eigenfrequenzen vom diesem Trägheitsmoment abhängig sind.

Eine reguläre Funktion der genannten Routinen und Funktionen setzt also voraus, dass das Steuergerät den Schließzustand der Reibungskupplung kennt. Bei dem bekannten Gegenstand erkennt das Steuergerät den Schließzustand aus dem Signal eines Pedalwegsensors, der sein Signal bei einer Betätigung des Kupplungspedals ändert. Der bekannte Pedalwegsensor liefert ein binäres Signal, das seinen Pegel bei einer geringfügigen Auslenkung des Kupplungspedals aus seiner Ruhelage ändert und dem Steuergerät auf diese Weise entweder eine geschlossene Kupplung oder eine offene Kupplung signalisiert.

In der Regel wird der Pedalweg, bei dem das binäre Signal seinen Pegel ändert, nicht mit dem Tastpunkt der Kupplung zusammenfallen. Dabei wird unter dem Tastpunkt der Kupplung die Position des Kupplungspedals verstanden, bei dem sich die Drehzahlen vor und hinter der Kupplung bei einsetzender Drehmomentübertragung angleichen. Tritt man das Kupplungspedal durch und lässt es anschließend wieder in seine Ruhelage zurückkehren, wird der Zeitraum, in dem die Kupplung tatsächlich offen ist, ganz in einem größeren Zeitraum liegen, für den der Pedalwegsensor eine offene Kupplung signalisiert. Mit anderen Worten: Beim Treten des Kupplungspedals reagiert der Pedalwegsensor zu früh, während er beim Zurücknehmen der Pedalbetätigung zu spät reagiert.

Dadurch wird zwar einerseits sichergestellt, dass die genannten Eingriffe tatsächlich nur bei geschlossener Kupplung erfolgen, was durchaus erwünscht ist. Andererseits könnten diese Eingriffe, wenn man einen Zeitraum nach einer Kupplungsbetätigung betrachtet, früher aktiviert werden, wenn das Steuergerät eine bessere Möglichkeit zur Unterscheidung einer geschlossenen von einer offenen Kupplung hätte.

Vor diesem Hintergrund besteht die Aufgabe der Erfindung in der Angabe eines Verfahrens und eines Steuergeräts, das jeweils eine verbesserte Unterscheidung einer geschlossenen von einer offenen Kupplung erlaubt.

Diese Aufgabe wird jeweils mit den Merkmalen der unabhängigen Ansprüche gelöst. Die Bestimmung einer über der Kupplung auftretenden Drehzahldifferenz, das heißt einer Differenz zwischen einer Kupplungseingangsdrehzahl und einer Kupplungsausgangsdrehzahl, erlaubt eine sichere Unterscheidung einer geschlossenen Kupplung von einer offenen Kupplung, wenn diese Zustände jeweils über eine gewisse Mindestzeitspanne anhalten.

Diese zusätzliche Zeitbedingung berücksichtigt im Triebstrang wirkende Trägheitsmomente. So dauert es beim Öffnen der Kupplung auch unter Last einige Millisekunden, bis die Drehzahl des Verbrennungsmotors so weit angestiegen ist, dass die Drehzahldifferenz einen vorbestimmten Schwellenwert überschreitet. Für diese dynamischen Übergänge zwischen geschlossener und offener Kupplung kann es daher vorteilhaft sein, weiterhin das Signal des praktisch ohne Trägheit reagierenden Pedalwegsensors auszuwerten. Dies ist vor allem für schnelle Schaltvorgänge im Wechselgetriebe von Bedeutung.
Ohne den Pedalwegsensor könnten zum Beispiel die genannten
Komfortfunktionen beim schnellen Schalten und geöffneter Kupplung noch aktiv sein. Da der Verbrennungsmotor bei geöffneter Kupplung aber bereits von dem übrigen Triebstrang entkoppelt ist und nicht durch dessen Trägheit gebremst wird, könnte dies zu unerwünschten Reaktionen des Verbrennungsmotors führen.

Die ergänzende Beurteilung in Abhängigkeit von der Drehzahldifferenz liefert dagegen die Möglichkeit, einen Übergang in der umgekehrten Richtung, also von einer offenen zu einer geschlossenen Kupplung, schnell zu erkennen.

Weitere Vorteile ergeben sich aus den Gegenständen der abhängigen Ansprüche, der Beschreibung und den beigefügten Figuren.

Es versteht sich, dass die vorstehend genannten und die nachstehend noch zu erläuternden Merkmale nicht nur in der jeweils angegebenen Kombinationen, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Triebstang eines Kraftfahrzeugs als technisches Umfeld der Erfindung;
- Fig. 2: ein Blockschaltbild als Ausführungsbeispiel der Erfindung; und
- Fig. 3: eine Ausgestaltung der Erfindung in Form eines detaillierten Blockschaltbildes.

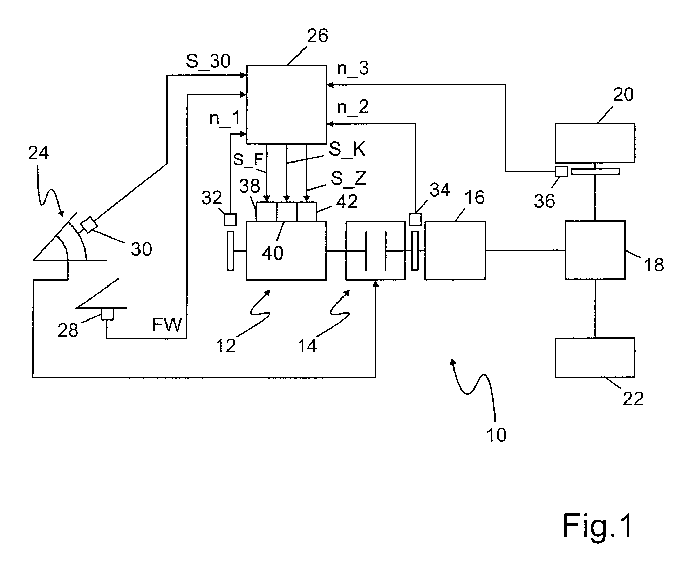

Im Einzelnen zeigt die Figur 1 einen Triebstrang 10 eines Kraftfahrzeugs mit einem Verbrennungsmotor 12, einer Kupplung 14, einem Wechselgetriebe 16, einem Differenzial 18 und Antriebsrädern 20, 22. Die Kupplung 14 ist eine Reibungskupplung, die vom Fahrer des Kraftfahrzeugs betätigt wird. Übliche Reibungskupplungen weisen wenigstens eine Mitnehmerscheibe auf, die mit Hilfe einer federbelasteten Druckplatte auf eine Schwungscheibe des Verbrennungsmotors 12 gepresst wird. Die Mitnehmerscheibe ist axial beweglich aber drehfest mit einer Getriebeeingangswelle verbunden. Im geschlossenen Zustand der Kupplung 14 wird das Drehmoment des Verbrennungsmotors 12 durch einen Kraftschluss in die Mitnehmerscheibe der Kupplung 14 übernommen und von dort auf die Getriebeeingangswelle übertragen.

Das Öffnen und Schließen der Kupplung 14 erfolgt durch den Fahrer gegen die Federbelastung durch Betätigen eines Kupplungspedals 24. Die Übertragung der Pedalkraft auf die Kupplung 14 erfolgt in der Regel über ein hydraulisches System.

Der Verbrennungsmotor 12 wird von einem Steuergerät 26 gesteuert, das dazu Signale verarbeitet, in denen sich verschiedene Betriebsparameter des Triebstrangs 10 abbilden. In der Darstellung der Figur 1 sind das vor allem Signale eines Fahrerwunschgebers 28, der eine Drehmomentforderung FW des Fahrers erfasst, das Signal S_30 eines Pedalwegsensors 30, der eine Betätigung des Kupplungspedals 24 erfasst, das Signal n_1 eines ersten Drehzahlgebers 34, der eine Verbrennungsmotor-seitige erste Drehzahl n_1 der Kupplung 14 (Kupplungseingangsdrehzahl) erfasst, das Signal n_2 eines zweiten Drehzahlgebers 34, der eine Wechselgetriebe-seitige zweite Drehzahl n_2 der Kupplung 14 (Kupplungsausgangsdrehzahl) erfasst, und, alternativ oder ergänzend zum zweiten Drehzahlgeber 34, das Signal n_3 eines Raddrehzahlgebers 36, der eine Drehzahl n_3 eines Antriebsrades 20 des Kraftfahrzeugs erfasst.

Unter der Voraussetzung, dass das Steuergerät 26 den im Wechselgetriebe 16 eingelegten Gang kennt, kann es die Drehzahl n_2 aus der Drehzahl n_3 und der vorliegenden Übersetzung bestimmen. Die Verwendung des für Antiblockiersysteme und/oder Fahrdynamikregelungen ohnehin vorhandenen Raddrehzahlgebers 36 besitzt daher Kostenvorteile, die sich durch eine mögliche Einsparung des zweiten Drehzahlgebers 34 ergeben. Anstelle der Raddrehzahl kann auch jede weitere Drehzahl im Triebstrang verwendet werden, die fest mit einer Drehzahl auf einer Ausgangsseite des Wechselgetriebes gekoppelt ist, zum Beispiel die Drehzahl eines Fahrgeschwindigkeitsgebers.

Der Pedalwegsensor 30 ist bevorzugt nicht als Endlagenschalter realisiert, sondern liefert dann eine Signaländerung, wenn das Kupplungspedal 24 eine vorbestimmte Pedalwegposition passiert, die zwischen den Endlagen liegt. Der Pedalwegsensor 30 stellt damit eine Ausgestaltung eines Sensors 30 dar, der eine Betätigung der Kupplung 14 detektiert.

In einer bevorzugten Ausgestaltung erzeugt das Steuergerät 26 ein internes Signal KB, das eine Betätigung der Kupplung 14 durch den Fahrer anzeigt, wenn der Pedalwegsensor 30 sein binäres Ausgangssignal ändert. Die Änderung tritt in einer Ausgestaltung bei ca. 5% des maximalen Pedalwegs auf. Andere Werte sind ebenfalls möglich. Wesentlich ist in jedem Fall, dass das Signal des Pedalwegsensors 30 dem Steuergerät 26 eine Betätigung des Kupplungspedals 24 durch den Fahrer signalisiert.

Es versteht sich, dass moderne Triebstränge 10 mit einer Vielzahl weiterer Sensoren ausgerüstet sind, die hier aus Gründen der Übersichtlichkeit nicht dargestellt sind. Beispiele solcher Sensoren sind Luftmassenmesser, Temperatursensoren, Drucksensoren, etc. Die Aufzählung der Sensoren und Geber 28 bis 36 ist daher nicht abschließend gemeint.

Es muss auch nicht für jeden vom Steuergerät 26 verarbeiteten Betriebsparameter ein eigener Sensor vorhanden sein, weil das Steuergerät 26 verschiedene Betriebsparameter mit Hilfe von Rechenmodellen aus anderen, gemessenen Betriebsparametern modellieren und/oder berechnen kann.

Dies gilt insbesondere für die Kupplungsausgangsdrehzahl n_2, die vom Steuergerät 26 in einer Ausgestaltung aus dem Signal n_3 des Raddrehzahlgebers 36 unter Berücksichtigung einer im Wechselgetriebe 16 eingestellten Übersetzung und der übrigen Übersetzungen im Triebstrang 10 modelliert wird. Die im Wechselgetriebe 16 eingestellte Übersetzung ergibt sich zum Beispiel bei geschlossener Kupplung 14 durch eine Zuordnung von Drehzahlwerten n_3 und n_1 zu einer bestimmten eingestellten Übersetzung und damit zu einem bestimmten eingelegten Gang. Diese Möglichkeit ergibt sich daraus, dass sich verschiedene Wertepaare der genannten Drehzahlwerte verschiedenen, diskreten Übersetzungsstufen im Wechselgetriebe 16 auf eindeutige Weise zuordnen lassen.

Aus den empfangenen Sensorsignalen S_30, n_1, n_2 und/oder n_3 beurteilt das Steuergerät 26 den Schließzustand der Kupplung 14 und bildet unter anderem Stellgrößen zur Einstellung des vom Verbrennungsmotor 12 zu erzeugenden Drehmomentes. Dabei erfolgt die Bildung der Stellgrößen in einer bevorzugten Ausgestaltung mit je nach Schließzustand der Kupplung 14 aktivierten oder deaktivierten Komfortfunktionen.

Im Übrigen ist das Steuergerät 26 dazu eingerichtet, insbesondere dazu programmiert, das erfindungsgemäße Verfahren oder eine seiner Ausgestaltungen durchzuführen und/oder den entsprechenden Verfahrensablauf zu steuern.

Als Stellglieder weist der Verbrennungsmotor 12 üblicherweise Teilsysteme 38, 40, 42 auf, von denen ein Teilsystem 38 zur Steuerung der Füllung von Brennräumen dient, ein Teilsystem 40 zur Steuerung der Gemischbildung dient, und ein Teilsystem 42 zur Steuerung der Zündung der Brennraumfüllungen dient. Das Teilsystem 38 zur Steuerung der Füllungen weist in einer Ausgestaltung eine elektronisch gesteuerte Drosselklappe zur Steuerung der Luftzufuhr zum Verbrennungsmotor 12 auf, die mit einem Stellsignal S_F angesteuert wird. Das Teilsystem 40 zur Steuerung der Gemischbildung weist in einer Ausgestaltung eine Anordnung von Injektoren auf, über die Kraftstoff mit Stellsignalen S_K in ein Saugrohr oder in individuelle Brennräume des Verbrennungsmotors 12 zugemessen wird. Stellsignale S_Z dienen zur Auslösung von Zündungen in den Brennräumen.

Das vom Verbrennungsmotor 12 erzeugte Drehmoment kann insbesondere durch Beschränkungen der Brennraumfüllungen und/oder durch Abschalten der Kraftstoffzufuhr zu einem oder mehreren Brennräumen und/oder durch Verzögern der Auslösung von Zündungen gegenüber einem Zündzeitpunkt, bei dem sich ein optimales Drehmoment ergeben würde, verringert werden (Spätverstellung der Zündung).

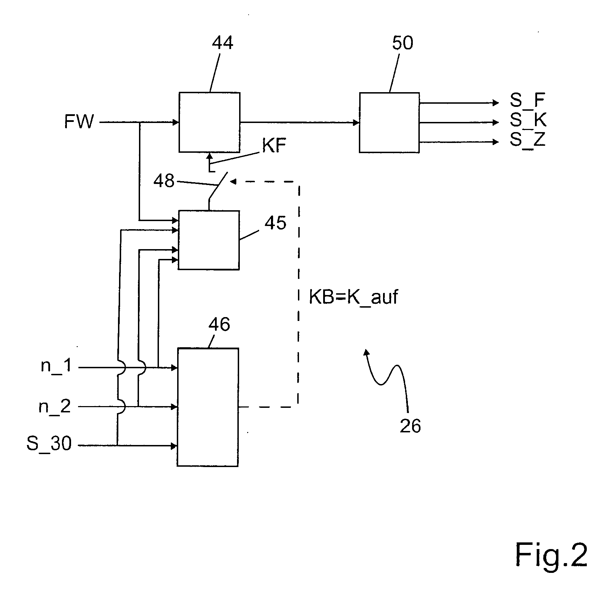

Fig. 2 veranschaulicht eine Ausgestaltung der Erfindung in der Form eines Blockschaltbilds des Steuergeräts 26. Die einzelnen Blöcke können dabei sowohl einzelnen Verfahrensschritten als auch Funktionsmodulen des Steuergeräts 26 zugeordnet werden, sodass die Fig. 2 sowohl Verfahrensaspekte als auch Vorrichtungsaspekte der Erfindung offenbart.

Im Einzelnen repräsentiert der Block 44 die Bildung eines Sollwertes M_Soll für das Drehmoment des Verbrennungsmotors 12 in Abhängigkeit von einem Fahrerwunsch FW und/oder in Abhängigkeit von Anforderungen KF, die im Steuergerät 26 für eine Steuerung des Verbrennungsmotors 12 gebildet werden. Solche Anforderungen ergeben sich zum Beispiel durch Komfortfunktionen, wie die weiter vorn als Beispiel genannten Anti-Ruckel-Funktionen und Routinen und Funktionen zur Lastschlagdämpfung. In der Ausgestaltung der Fig. 2 erfolgt die Bildung solcher Anforderungen KF durch den Block 45, der allgemein die Bildung interner Drehmomentanforderungen KF durch Funktionen des Steuergeräts 26 repräsentiert.

In einem Beurteilungsblock 46 findet die Beurteilung des Schließzustandes der Kupplung 14 in Abhängigkeit vom Signal S_30 des Pedalwegsensors 30 und den Werten der Drehzahlen n_1 und n_2 im Triebstrang 10 vor und hinter der Kupplung 14 statt. Dabei bildet der Beurteilungsblock 46 eine Drehzahldifferenz dn über der Kupplung 14 als Differenz der Werte der Drehzahlen n_1 und n_2 und beurteilt den Schließzustand der Kupplung 14 in Abhängigkeit vom Signal S_30 des Pedalwegsensors 30 und ergänzend in Abhängigkeit von der Drehzahldifferenz dn.

Als Ergebnis der Beurteilung gibt der Block 46 ein Signal KB aus, in dem sich der erkannte Schließzustand der Kupplung 14 abbildet. In einer Ausgestaltung ist KB ein binäres Signal, das bei als geschlossen erkannter Kupplung 14 einen Wert K_zu und bei als offen erkannter Kupplung 14 einen Wert K_auf annimmt oder zugewiesen bekommt. In der Ausgestaltung der Figur 2 dient dieses Signal KB zur Ansteuerung eines Software-Schalters 48, mit dem Drehmoment-Anforderungen KF der genannten Komfortfunktionen oder anderer Funktionen des Steuergeräts 26, die im Block 45 gebildet werden, als zusätzliche Eingangsgrößen auf den Block 44 gegeben werden können. Wenn der Block 46 eine geschlossene Kupplung 14 erkennt, gibt er ein Signal KB = K_zu aus, mit dem der Software-Schalter 48 geschlossen wird. In diesem Fall wird der Drehmomentsollwert M_soll im Block 44 unter Berücksichtigung der zusätzlichen Anforderungen KF gebildet. Erkennt der Block 46 dagegen eine offene Kupplung, öffnet er den Schalter 48 mit einem Signal KB = K_auf und deaktiviert damit zum Beispiel eine oder mehrere der genannten Komfortfunktionen.

Der im Block 44 gebildete Sollwert M_Soll wird an eine Stellgrößenbildung 50 übergeben, die daraus die Stellgrößen S_F und/oder S_K und/oder S_Z bildet, mit denen die Teilsysteme 38 und/oder 40 und/oder 42 aus der Figur 1 so angesteuert werden, dass der Verbrennungsmotor 12 das geforderte Drehmoment M_Soll erzeugt.

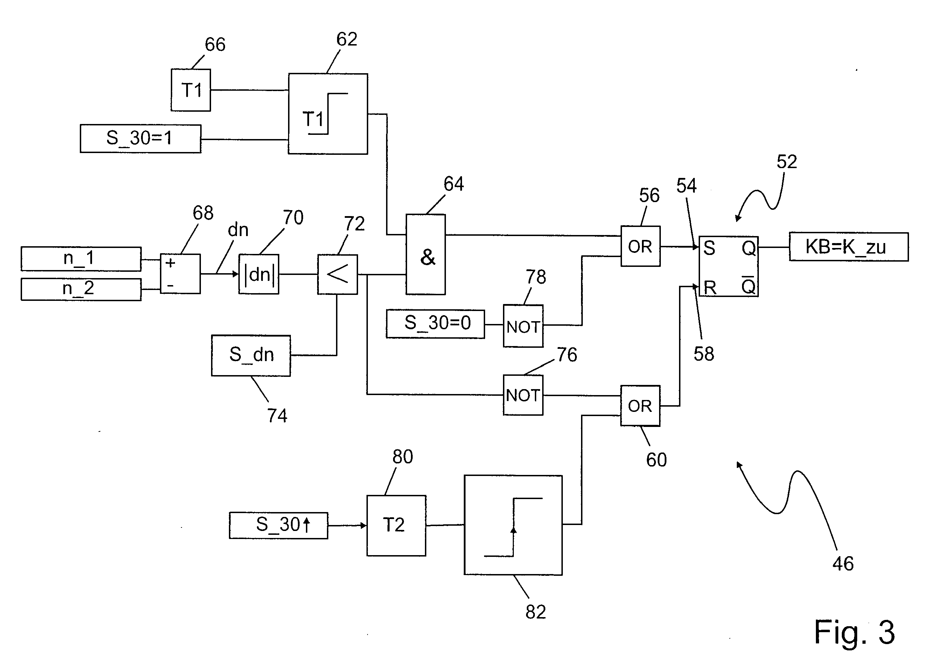

Figur 3 zeigt ein Blockschaltbild des Blocks 46 aus der Figur 2, der den Schließzustand der Kupplung 14 beurteilt. Auch hier gilt, wie bei der Fig. 2, dass die einzelnen Blöcke sowohl einzelnen Verfahrensschritten als auch Funktionsmodulen des Blocks 46 im Steuergerät 26 zugeordnet werden können. Daher offenbart die Fig. 3 sowohl Verfahrensaspekte als auch Vorrichtungsaspekte der Erfindung.

Dabei erfolgt die Ausgabe des Signals KB = K_zu, das eine geschlossene Kupplung 14 repräsentiert, oder eines Signals K_auf, das eine offene Kupplung 14 repräsentiert, mit einem Flip-Flop 52, dessen Setzeingang 54 mit dem Ausgang eines ersten Oder-Gliedes 56 und dessen Rücksetzeingang 58 mit dem Ausgang eines zweiten Oder-Gliedes 60 verbunden ist. Das Flip-Flop 52 gibt das Signal KB = K_zu aus, wenn eine logische 1 an seinem Setzeingang 54 anliegt. Liegt dagegen eine logische 1 an dem Rücksetzeingang 58 an, setzt das Flip-Flop 52 sein Ausgangssignal KB auf den Wert KB = K_auf zurück. In der Fig. 3 ist das Flip-Flop 52 in seinem gesetzten Zustand dargestellt, in dem es KB = K_zu ausgibt.

Sowohl das erste Oder-Glied 56 als auch das zweite Oder-Glied 60 verfügt jeweils über zwei Eingänge, so dass sich insgesamt vier Situationen ergeben, in denen das Flip-Flop 52 sein Ausgangssignal KB entweder setzt (KB = KB_zu) oder zurücksetzt (KB = K_auf). Im Folgenden werden diese vier Situationen, die sich in unterschiedlichen Konstellationen der Eingangssignale S_30, n_1 und n_2 abbilden, nacheinander betrachtet.

In der ersten Situation soll das Signal S_30 des Pedalwegsensors 30 eine offene Kupplung 14 signalisieren: S_30 = 1. Ein Verzögerungsblock 62, der eine Tiefpass-Charakteristik besitzt, gibt dieses Signal nur dann an eine Und-Verknüpfung 64, wenn der Pedalwegsensor 30 eine Betätigung der Kupplung 14 detektiert, die länger als eine bestimmte Mindestdauer T1 anhält. In einer Ausgestaltung besitzt T1 einen Wert in der Größenordnung von 500 ms. Der Wert für T1 wird einer Speicherzelle 66 entnommen.

Parallel wird in einer Verknüpfung 68 eine Differenz dn der Drehzahlen n_1 und n_2 gebildet. In einer Betragsbildung 70 erfolgt eine Bildung des Absolutbetrages der Differenz dn. Ein Vergleicher 72 dient zum Vergleichen des Absolutbetrages der Differenz dn mit einem Schwellenwert S_dn, der aus einer Speicherzelle 74 ausgelesen wird und der eine konfigurierbare Differenzdrehzahl zur Bestimmung einer geschlossenen Kupplung 14 repräsentiert.

Wenn der Absolutbetrag der Drehzahldifferenz dn kleiner als dieser Schwellenwert S_dn ist, wird der Und-Verknüpfung 64 eine logische Eins übergeben. Mit der Und-Verknüpfung 64 wird daher überprüft, ob die Auswertung der Drehzahldifferenz dn über der Kupplung 14 einen Widerspruch zum Signal S_30 = 1 des Pedalwegsensors 30, das eine offene Kupplung 14 signalisiert, ergibt.

Ein solcher Widerspruch tritt z.B. dann auf, wenn der Fahrer seinen Fuß auf dem Kupplungspedal 24 ruhen lässt und es dabei leicht aus seiner Ruhelage auslenkt, ohne das Kupplungspedal 24 durchzutreten. Da der Pedalwegsensor 30 bereits bei einem vergleichsweise kleinen Pedalweg anspricht, signalisiert er in diesem Fall eine offene Kupplung 14, obwohl tatsächlich noch ein Kraftschluss über die Kupplung 14 existiert. Dieser Kraftschluss sorgt für Angleichung der Drehzahlen n_1 und n_2 vor und hinter der Kupplung 14, so dass die Auswertung der Drehzahldifferenz dn eindeutig auf eine geschlossene Kupplung 14 schließen lässt. Dies führt über die Und-Verknüpfung 64 und das erste Oder-Glied 56 zu einem Setzen des Signals KB = K_zu durch das Flip-Flop 52.

Damit erzeugt diese Struktur dann, wenn der Pedalwegsensor 30 eine Betätigung der Kupplung 14 detektiert, die länger als die bestimmte Mindestdauer T1 anhält, und der Absolutbetrag der Drehzahldifferenz dn den vorbestimmten Schwellenwert S_dn unterschreitet, ein Signal KB = K_zu, das eine geschlossene Reibungskupplung 14 charakterisiert. Der konfigurierbare Wert der Mindestdauer T1 stellt daher eine minimale Zeit da, in der die Kupplung 14 und damit der Triebstrang 10 ohne Auftreten einer Drehzahldifferenz als offen beurteilt werden kann.

Eine zweite Situation ist dadurch charakterisiert, dass eine nennenswerte Drehzahldifferenz dn auftritt, die den Schwellenwert S_dn im Vergleicher 72 überschreitet. Dann erfolgt kein Setzen des Signals K_zu über die Und-Verknüpfung 64. Vielmehr erzeugt der Vergleicher 72 in diesem Fall eine logische 0, die über einen Invertierer 76 in eine logische 1 umgewandelt wird und über das zweite Oder-Glied 60 zu einem Rücksetzen des Flip-Flops 52 und damit zu einer Ausgabe eines Signals KB = K_auf führt, das eine offene Kupplung 14 repräsentiert.

Damit erzeugt diese Struktur dann, wenn die Drehzahldifferenz über der Kupplung 14 den vorbestimmten Schwellenwert S_dn überschreitet, ein Signal KB = K_auf, das eine offene Kupplung 14 charakterisiert.

Eine dritte Situation ist dadurch charakterisiert, dass der Pedalwegsensor 30 eine geschlossene Kupplung 14 signalisiert, also insbesondere ein Signal S_30 = 0 ausgibt. Diese Information wird in dem Invertierer 78 invertiert und nach der Invertierung als logische Eins dem ersten Oder-Glied 56 zugeführt, dass daraufhin den Setzeingang 54 des Flip-Flops 52 ansteuert. Das Flip-Flop 52 gibt dann das Signal KB = K_zu aus, das eine geschlossene Kupplung 14 repräsentiert.

Als Folge wird dann, wenn der Pedalwegsensor 30 keine Betätigung der Kupplung 14 detektiert, ein Signal KB = K_zu erzeugt, das eine geschlossene Reibungskupplung 14 charakterisiert.

Eine vierte Situation ist dadurch charakterisiert, dass eine Flanke im Signal S_30 des Pedalwegsensors 30 auftritt, die eine öffnende Betätigung des Kupplungspedals 24 signalisiert. Der Block 80 repräsentiert eine vorbestimmte Verzögerungszeit T2, die ablaufen muss, bevor ein Flankendetektor 82 als Reaktion auf die Flanke eine logische 1 ausgibt. Die genannte Flanke im Signal S_30 erzeugt dann nach einer Verzögerung um die vorbestimmte Verzögerungszeit T2 im Block 80, einer Weitergabe über den Flankendetektor 82 sowie über das zweite Oder-Glied 60 an den Rücksetzeingang 58 des Flip-Flops 52, ein für eine offene Kupplung 14 repräsentatives Ausgangssignal KB = K_auf. Die vorbestimmte Verzögerungszeit T_2 ist bevorzugt kürzer als die bestimmte Mindestdauer T_1 und besitzt in einer Ausgestaltung einen Wert in einer Größenordnung von 150 ms.

Damit erzeugt diese Struktur dann, wenn der Pedalwegsensor 30 eine Kupplungsbetätigung detektiert und seit der Detektion eine vorbestimmte Verzögerungszeit T2 abgelaufen ist, ein Signal KB = K_auf, dass eine offene Kupplung 14 charakterisiert.

Insgesamt ergibt sich damit das folgende Verhalten der Struktur beim Anfahren, Schalten und einem Fahren mit auf dem Kupplungspedal 24 ruhenden Fuß:

Beim Anfahren ist das Signal S_30 des Pedalwegsensors 30 bei getretener Kupplung 14 zunächst gleich eins. Sobald die Kupplung 14 greift und sich das Fahrzeug in Bewegung setzt, gleichen sich die Drehzahlen n_1 des Verbrennungsmotors 12 und n_2 am Eingang des Wechselgetriebes 16 an. Sobald die Drehzahldifferenz dn dann den konfigurierbaren Schwellenwert S_dn unterschreitet, wird über das Flip-Flop 52 das Signal KB = K_zu erzeugt, dass eine geschlossene Kupplung 14 repräsentiert.

Beim Schaltvorgang wird nach dem Treten des Kupplungspedals 24 und Ablauf der konfigurierbaren Verzögerungszeit T2 das Flip-Flop 52 durch die steigende Flanke des Signals S_30 zurückgesetzt. Als Folge wird zumindest kurzzeitig ein Signal KB = K_auf erzeugt, dass eine offene Kupplung 14 repräsentiert. Dieses Signal öffnet den Schalter 48 in der Figur 2, so dass der Schaltvorgang und das Verhalten des Verbrennungsmotors 12 beim Schaltvorgang nicht durch Drehmomentanforderungen des Blocks 45 in der Figur zwei gestört wird.

Beim Treten des Kupplungspedals 24 würde die offene Kupplung 14 zwar auch beim Auftreten einer ausreichend großen Drehzahldifferenz dn durch den Vergleicher 72 erkannt werden. Dies würde aber wegen der Trägheitsmomente der beteiligten rotierenden Massen erst relativ spät erfolgen, so dass die Verbindung zwischen den Blöcken 45 und 44 in der Figur zwei erst vergleichsweise spät aufgetrennt würde. Als Folge könnten unerwünschte Drehzahlschwankungen des Verbrennungsmotors 12 beim Schaltvorgang auftreten.

Beim Fahren mit auf dem Kupplungspedal 24 ruhenden Fuß wird die Kupplung 14 anfangs, wenn eine entsprechende Flanke im Signal S_30 des Pedalwegsensors 30 auftritt, als offen beurteilt. Dabei erfolgt diese Beurteilung über die Blöcke 80, 82, 60 und 52 in der Struktur der Figur 3, obwohl der Kraftschluss nicht unterbrochen ist. Dies ist aber unproblematisch, weil in diesem Fall, in dem die Kupplung 14 nicht wirklich geöffnet ist, die Drehzahldifferenz dn kleiner als der Schwellenwert S_dn sein wird, was dann auf die im Zusammenhang mit der ersten Situation beschriebenen Weise wieder zur zutreffenden Beurteilung der Kupplung 14 als geschlossen führt.

## Patentansprüche

1. Verfahren zum Beurteilen des Schließzustands einer Kupplung (14) in einem Triebstrang (10) eines Kraftfahrzeugs, mit der ein Fahrer einen Kraftschluss zwischen einem Verbrennungsmotor (12) und einem Wechselgetriebe (16) des Kraftfahrzeugs steuert, wobei die Beurteilung in Abhängigkeit vom Signal eines Sensors (30) erfolgt, der eine Betätigung der Kupplung (14) detektiert, **dadurch gekennzeichnet, dass** eine über der Kupplung (14) auftretende Drehzahldifferenz (dn) bestimmt wird, und die Beurteilung ergänzend in Abhängigkeit von der Drehzahldifferenz (dn) erfolgt.

2. Verfahren nach Anspruch 1, **dadurch gekennzeichnet, dass** dann, wenn der Sensor (30) keine Betätigung der Kupplung (14) detektiert, ein Signal (KB = K_zu) erzeugt wird, das eine geschlossene Kupplung (14) charakterisiert.

3. Verfahren nach einem der vorhergehenden Ansprüche, **dadurch gekennzeichnet, dass** dann, wenn der Sensor (30) eine Betätigung der Kupplung (14) detektiert, die länger als eine bestimmte Mindestdauer (T1) anhält, und der Absolutbetrag der Drehzahldifferenz (dn) einen vorbestimmten Schwellenwert (S_dn) unterschreitet, ein Signal (KB = K_zu) erzeugt wird, das eine geschlossene Kupplung (14) charakterisiert.

4. Verfahren nach einem der vorhergehenden Ansprüche **dadurch gekennzeichnet, dass** dann, wenn der Sensor (30) eine Kupplungsbetätigung detektiert und seit der Detektion eine vorbestimmte Verzögerungszeit (T2) abgelaufen ist, ein Signal (KB = K_auf) erzeugt wird, dass eine offene Kupplung (14) charakterisiert.

5. Verfahren nach Anspruch 3 und 4, **dadurch gekennzeichnet, dass** die Mindestdauer (T1) größer als die Verzögerungszeit (T2) ist.

6. Verfahren nach einem der vorhergehenden Ansprüche, **dadurch gekennzeichnet, dass** dann, wenn die Drehzahldifferenz (dn) über der Kupplung (14) den vorbestimmten Schwellenwert (S_dn) überschreitet, ein Signal (KB = K_auf) erzeugt wird, das eine offene Kupplung (14) charakterisiert.

7. Verfahren nach einem der vorhergehenden Ansprüche, **dadurch gekennzeichnet, dass** eine Drehzahl des Verbrennungsmotors (12) als erste Drehzahl (n_1) erfasst wird, eine Drehzahl einer Getriebeeingangswelle als zweite Drehzahl (n_2) erfasst wird, und die Drehzahldifferenz (dn) über der Kupplung (14) als Differenz der ersten Drehzahl (n_1) und der zweiten Drehzahl (n_2) bestimmt wird.

8. Verfahren nach einem der vorhergehenden Ansprüche, **dadurch gekennzeichnet, dass** eine Drehzahl des Verbrennungsmotors (12) als erste Drehzahl (n_1) erfasst wird, eine weitere Drehzahl (n_3) im Triebstrang (10) auf einer Ausgangsseite des Wechselgetriebes (16) erfasst wird, aus der weiteren Drehzahl (n_3) und einem Übersetzungsverhältnis eine Drehzahl der Getriebeeingangswelle als zweite Drehzahl (n_2) bestimmt wird, und die Drehzahldifferenz (dn) über der Kupplung (14) als Differenz der ersten Drehzahl (n_1) und der zweiten Drehzahl (n_2) bestimmt wird.

9. Steuergerät (26), das dazu eingerichtet ist, den Schließzustand einer Kupplung (14) in einem Triebstrang (10) eines Kraftfahrzeugs zu beurteilen, mit der ein Fahrer einen Kraftschluss zwischen einem Verbrennungsmotor (12) und einem Wechselgetriebe (16) des Kraftfahrzeugs steuert, wobei das Steuergerät (26) dazu eingerichtet ist, den Schließzustand in Abhängigkeit vom Signal (S_30) eines Sensors (30) zu beurteilen, der eine Betätigung der Kupplung (14) detektiert, **dadurch gekennzeichnet, dass** das Steuergerät (26) dazu eingerichtet ist, eine über der Kupplung (14) auftretende Drehzahldifferenz (dn) zu bestimmen und den Schließzustand ergänzend in Abhängigkeit von der Drehzahldifferenz (dn) zu beurteilen.

10. Steuergerät (26) nach Anspruch 9, **dadurch gekennzeichnet, dass** es dazu eingerichtet ist, ein Verfahren nach einem der Ansprüche 2 bis 8 durchzuführen.
